# EUROPEAN PATENT APPLICATION

(11) **EP 2 762 346 A1**
(43) Date of publication of application: **06.08.2014**
(21) Application number: 11873268.4
(22) Date of filing: 26.09.2011
(51) Int. Cl.: B60L 3/00, H01M 10/48, H02J 7/00

(54) **BATTERY PROCESSING DEVICE, VEHICLE, BATTERY PROCESSING METHOD, AND BATTERY PROCESSING PROGRAM**

(71) Applicant: Toyota Jidosha Kabushiki Kaisha, Toyota-shi, Aichi 471-8571 (JP)
(72) Inventor: TSUSHIMA, Manabu, Toyota-shi Aichi 471-8571 (JP)
(74) Representative: TBK
(86) International application number: PCT/JP2011/005399
(87) International publication number: WO 2013/046250

(57) **Abstract**

[PROBLEM] It is an object of the present invention to reduce the burden of processing of a battery.

[SOLVING MEANS] A battery processing apparatus includes a chargeable and dischargable battery storing electric power to be supplied to a motor for driving a wheel, and a controller performing discharge allowing processing of switching from a second state in which discharge from the battery to a load is not allowed to a first state in which the discharge from the battery to the load is allowed upon reception of on a discharge allowing signal in an overcharged state of the battery in which charge of the battery is suppressed due to an electric storage amount in the battery.

## Description

### TECHNICAL FIELD

The present invention relates to a processing technology for processing an overcharged battery.

### BACKGROUND ART

A chargeable and dischargable battery including a plurality of cells connected electrically is known as a driving power source or an auxiliary power source for an electric car, a hybrid car and the like. An ECU for controlling the charge and discharge of the battery controls the charge of the battery such that the voltage of the battery does not exceed an upper limit value, and performs control for prohibiting the charge and discharge of the battery by turning off an SMR when a charge termination voltage higher than the upper limit value is reached. This prevents the running of the vehicle using the battery. The overcharged battery is collected by a dealer or the like.

Patent Document 1 has disclosed a control method in which the voltage generated by an alternator is controlled to prevent the deterioration of a battery such that, when it is determined that the battery is overcharged, the voltage generated by the alternator is reduced to such a voltage value as not to charge or discharge the battery to prohibit regenerative power generation control until fuel cut control is finished.

### PRIOR ART DOCUMENTS

### PATENT DOCUMENTS

[Patent Document 1] Japanese Patent Laid-Open No. 2008-255913
[Patent Document 2] Japanese Patent Laid-Open No. 2004-319304
[Patent Document 3] Japanese Patent Laid-Open No. 8 (1996) -205304

### DISCLOSURE OF THE INVENTION

### PROBLEMS TO BE SOLVED BY THE INVENTION

The overcharged battery is difficult to deal with and involves a significant burden of processing on the dealer or the like. It is thus an object of the present invention to reduce the burden of processing of such an overcharged battery.

### MEANS FOR SOLVING THE PROBLEMS

To solve the problem, the present invention provides, according to an aspect thereof,
(1) a battery processing apparatus mounted on a vehicle, including a chargeable and dischargable battery storing electric power to be supplied to a motor for driving a wheel, and a controller performing discharge allowing processing of switching from a second state in which discharge from the battery to a load is not allowed to a first state in which the discharge from the battery to the load is allowed on the basis of a discharge allowing signal in an overcharged state of the battery in which charge of the battery is suppressed due to an electric storage amount in the battery.
(2) In the configuration of (1), the controller may perform the discharge allowing processing by controlling a switch element switching between the first state and the second state.
(3) In the configuration of (2), the switch element is a relay, and the controller sets the relay to the second state in the overcharged state before reception of the discharge allowing signal to prohibit the running of the vehicle using the battery. According to the configuration of (3), the battery mounted on the vehicle prohibited from running due to the overcharge of the battery can be subjected to discharge processing while it is mounted on the vehicle.
(4) In the configuration of (3), the controller can perform the discharge allowing processing and discharge the battery together. According to the configuration of (4), since the discharge allowing processing and the battery discharge are performed together, the overcharged state of the battery can be eliminated immediately.
(5) In the configuration of (3), the controller performs the discharge allowing processing and then discharges the battery in response to the operation of an accelerator pedal of the vehicle. According to the configuration of (5), the discharge processing can be performed at any time desired for a processor who processes the battery.
(6) In the configuration of (2), the battery includes an equalizing circuit having a resistor serving as the load and the switch element, and when the controller switches the switch element from the second state to the first state, the power of the battery is discharged to the equalizing circuit. According to the configuration of (6), the equalizing circuit which reduces variations in the electric storage amount among battery cells can be used to eliminate the overcharged state of the battery.
(7) In the configuration of any one of (1) to (6), an obtaining section obtaining the information about the electric storage amount in the battery is included, and when the degree of drop of the electric storage amount is equal to or lower than a predetermined value during discharge processing based on the discharge allowing processing, the controller can reduce the amount of the discharge. According to the configuration of (7), the electric storage amount in the battery can be prevented from falling below a lower limit control value.
(8) In the configuration of any one of (1) to (6), when the electric storage amount falls below a predetermined value during discharge processing based on the discharge allowing processing, the controller can stop the discharge. According to the configuration of (7), the overdischarge of the battery can be prevented.
(9) In the configuration of any one of (1) to (8), when the electric storage amount in the battery exceeds a control upper limit value during the charge of the battery, the controller can suppress the charge, and when the electric storage amount in the battery reaches an electric storage amount higher than the control upper limit value and corresponding to the overcharged state, the controller can prohibit the charge and discharge.
(10) The battery processing apparatus according to any one of (1) to (9) can be mounted on a vehicle.

To solve the abovementioned problem, the present invention provides a battery processing method for processing a battery mounted on a vehicle, the battery being chargeable and dischargable and storing electric power to be supplied to a motor for driving a wheel, including performing discharge allowing processing of switching from a second state in which discharge from the battery to a load is not allowed to a first state in which the discharge from the battery to the load is allowed in an overcharged state of the battery in which charge of the battery is suppressed due to an electric storage amount in the battery.

To solve the abovementioned problem, the present invention provides a battery processing program for causing a computer to perform processing operation of processing a battery mounted on a vehicle, the battery being chargeable and dischargable and storing electric power to be supplied to a motor for driving a wheel, including a discharge allowing processing step of switching from a second state in which discharge from the battery to a load is not allowed to a first state in which the discharge from the battery to the load is allowed in an overcharged state of the battery in which charge of the battery is suppressed due to an electric storage amount in the battery.

### ADVANTAGE OF THE INVENTION

According to the present invention, the burden of processing of an overcharged battery can be reduced.

### BRIEF DESCRIPTION OF THE DRAWINGS

[Fig. 1] A block diagram showing the hardware configuration of part of a vehicle.
[Fig. 2] A functional block diagram of part of the vehicle.
[Fig. 3] A flow chart showing the procedure of processing a high-voltage battery.
[Fig. 4] A circuit diagram of the high-voltage battery including an equalizing circuit.
[Fig. 5] A circuit diagram of the equalizing circuit. MODE FOR CARRYING OUT THE INVENTION

### EMBODIMENT 1

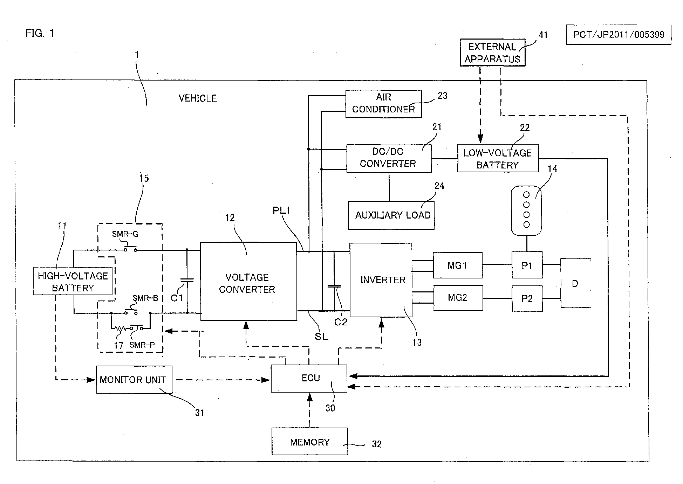

Embodiments of the present invention will hereinafter be described in detail with reference to the drawings. Fig. 1 is a block diagram showing the hardware configuration of part of a vehicle which is an embodiment of the present invention. In Fig. 1, an arrow indicated by a solid line represents the direction of power supply, and arrows indicated by dotted lines represent the directions of signal transmission. A vehicle 1 is a hybrid car which has a driving system for driving a motor using the output from a battery and a driving system with an engine. The present invention is applicable to an electric car which has only the driving system for driving the motor using the output from the battery.

Referring to Fig. 1, the vehicle 1 includes a high-voltage battery 11, smoothing capacitors C1 and C2, a voltage converter 12, an inverter 13, a motor generator MG1, a motor generator MG2, a power splitting planetary gear P1, a reduction planetary gear P2, a decelerator D, an engine 14, a relay 15, a DC/DC converter 21, a low-voltage battery 22, an air conditioner 23, an auxiliary load 24, an ECU 30, a monitor unit 31, and a memory 32.

The high-voltage battery 11 can be provided by using an assembled battery including a plurality of secondary batteries connected in series. Examples of the secondary battery can include a nickel metal hydride battery and a lithium-ion battery. The vehicle 1 also includes a power source line PL1 and a ground line SL. The high-voltage battery 11 is connected to the voltage converter 12 through system main relays SMR-G, SMR-B, and SMR-P which constitute the relay 15.

The system main relay SMR-G is connected to a positive terminal of the high-voltage battery 11, and the system main relay SMSR-B is connected to a negative terminal of the high-voltage battery 11. The system main relay SMR-P and a precharge resistor 17 are connected in parallel with the system main relay SMR-B.

These systemmain relays SMR-G, SMR-B, and SMR-P are relays having contacts that are closed when their coils are energized. "ON" of the SMR means an energized state, and "OFF" of the SMR means a non-energized state.

The ECU 30 turns off all the system main relays SMR-G, SMR-B, and SMR-P while the power is shut off, that is, while an ignition switch is at an OFF position. Specifically, the ECU 30 turns off the current for energizing the coils of the system main relays SMR-G, SMR-B, and SMR-P. The position of the ignition switch is switched in the order from the OFF position to an ON position. The ECU 30 may be a CPU or an MPU, and may include an ASIC circuit which performs, based on circuital operation, at least part of processing executed in the CPU or the like. The ECU 30 starts up by receiving the power supply from the low-voltage battery 22.

Upon start-up of a hybrid system (upon connection to a main power source), that is, for example when a driver steps on a brake pedal and depresses a start switch of push type, the ECU 30 first turns on the system main relay SMR-G. Next, the ECU 30 turns on the system main relay SMR-P to perform precharge.

The precharge resistor 17 is connected to the system main relay SMR-P. Thus, even when the system main relay SMR-P is turned on, the input voltage to the inverter 13 can be slowly increased to prevent the occurrence of an inrush current.

When the ignition switch is switched from the ON position to the OFF position, the ECU 30 first turns off the system main relay SMR-B and then turns off the system main relay SMR-G. This breaks the electrical connection between the high-voltage battery 11 and the inverter 13 to enter a power shut-off state. The system main relays SMR-B, SMR-G, and SMR-P are controlled for energization or non-energization in response to a control signal provided by the ECU 30.

The capacitor C1 is connected between the power source line PL1 and the ground line SL and smoothes an inter-line voltage. The DC/DC converter 21 and the air conditioner 23 are connected in parallel between the power source line PL1 and the ground line SL. The DC/DC converter 21 drops the voltage supplied by the high-voltage battery 11 to charge the low-voltage battery 22 or to supply the power to the auxiliary load 24. The auxiliary load 24 includes an electronic device such as a lamp and an audio for the vehicle, not shown.

The voltage converter 12 increases an inter-terminal voltage of the capacitor C1. The capacitor C2 smoothes the voltage increased by the voltage converter 12. The inverter 13 converts the DC voltage provided by the voltage converter 12 into a three-phase AC current and outputs the AC current to the motor generator MG2. The reduction planetary gear P2 transfers a motive power obtained in the motor generator MG2 to the decelerator D to drive the vehicle. The power splitting planetary gear P1 splits a motive power obtained in the engine 14 into two. One of them is transferred to wheels through the decelerator D, and the other drives the motor generator MG1 to perform power generation.

The power generated in the motor generator MG1 is used for driving the motor generator MG2 to assist the engine 14. The reproduction planetary gear P2 transfers a motive power transferred through the decelerator D to the motor generator MG2 during the deceleration of the vehicle to drive the motor generator MG2 as a power generator. The power obtained in the motor generator MG2 is converted from the three-phase AC current into a DC current in the inverter 13 and is transferred to the voltage converter 12. In this case, the ECU 30 performs control such that the voltage converter 12 operates as a step-down circuit. The power at the voltage dropped by the voltage converter 12 is stored in the high-voltage battery 11.

The monitor unit 31 obtains the information about the voltage, current, and temperature of the high-voltage battery 11. The monitor unit 31 is formed as a unit integral with the high-voltage battery 11. The voltage value obtained by the monitor unit 31 may be the voltage value of each battery cell (cell) when the secondary batteries constituting the high-voltage battery 11 are the lithium-ion batteries. The voltage value detected by the monitor unit 31 may be the voltage value of each of battery modules (cell groups each including a plurality of battery cells connected in series) when the secondary batteries constituting the high-voltage battery 11 are the nickel metal hydride batteries. The temperature of the high-voltage battery 11 may be obtained through a thermistor, not shown.

The memory 32 stores the information about a control upper limit value and a control lower limit value of an electric storage amount for use in charge and discharge control of the high-voltage battery 11. The ECU 30 performs control such that the electric storage amount in the high-voltage battery 11 is maintained within a control range defined by the control upper limit value and the control lower limit value. The ECU 30 suppresses charge when the electric storage amount in the high-voltage battery 11 exceeds the control upper limit value. The ECU 30 prohibits the charge and discharge of the high-voltage battery 11 when the electric storage amount in the high-voltage battery 11 reaches an electric storage amount corresponding to a charge termination voltage higher than the control upper limit value. The state in which the high-voltage battery 11 reaches the charge termination voltage or exceeds the charge termination voltage is referred to as an overcharged state.

The ECU 30 suppresses discharge when the electric storage amount in the high-voltage battery 11 falls below the control lower limit value. The ECU 30 prohibits the charge and discharge of the high-voltage battery 11 when the electric storage amount in the high-voltage battery 11 reaches an electric storage amount corresponding to a discharge termination voltage lower than the control lower limit value. The state in which the electric storage amount in the high-voltage battery 11 reaches the discharge termination voltage or falls below the discharge termination voltage is referred to as an overdischarged state.

The high-voltage battery 11 is deteriorated when it is in the overcharged state or in the overdischarged state. The ECU 30 calculates the electric storage amount based on the information about the voltage, current, and temperature obtained by the monitor unit 31, and when the ECU 30 determines that at least one of the cells included in the high-voltage battery 11 is in the overcharged or overdischarged state, the ECU 30 turns off the system main relay SMR-B and the system main relay SMR-G to break the electrical connection between the high-voltage battery 11 and the inverter 13.

Alternatively, when the ECU 30 determines that at least one of the cells included in the high-voltage battery 11 is in the overcharged or overdischarged state, the ECU 30 may prohibit the charge and discharge of the high-voltage battery 11 by controlling the inverter 13 without turning off the system main relay SMR-B and the system main relay SMR-G. This causes the vehicle 1 to enter a running disabled state in which the running using the high-voltage battery 11 is disabled. The ECU 30 is provided at a position separate from the high-voltage battery 11. Alternatively, the ECU 30 and the high-voltage battery 11 may be formed as a unit.

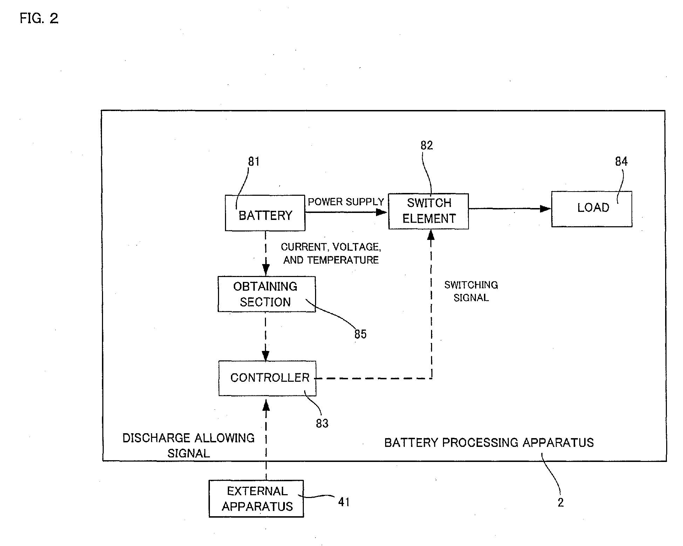

Next, the configuration of a battery processing apparatus is described with reference to a functional block diagram of Fig. 2. In Fig. 2, arrows indicated by solid lines represent the directions of power supply, and arrows indicated by dotted lines represent the directions of signal transmission. A battery processing apparatus 2 includes a battery 81, a switch element 82, a controller 83, a load 84, and an obtaining section 85. The battery 81 can be charged and discharged and stores power to be supplied to a motor for driving the wheels. Referring to Fig. 1 and Fig. 2 in comparison, the battery 81 corresponds to the high-voltage battery 11, and the motor corresponds to the motor generator MG2. The switch element 82 is switched between a first state in which discharge from the battery 81 to the load 84 is allowed and a second state in which the discharge from the battery 81 to the load 84 is not allowed. Referring again to Fig. 1 and Fig. 2 in comparison, the switch element 82 corresponds to the relay 15.

The controller 83 performs discharge allowing processing of receiving a discharge allowing signal to switch the switch element 82 from the second state to the first state in the overcharged state of the battery 81. However, if the controller 83 has prohibited the discharge through the control of the inverter 13 without switching the switch element 82 from the first state to the second state at the time when the battery 81 reaches the overcharged state, the controller 83 may perform the discharge allowing processing by outputting a command signal for performing discharge processing to the inverter 13 based on the received discharge allowing signal. Referring to Fig. 1 and Fig. 2 in comparison, the controller 83 corresponds to the ECU 30. The discharge allowing signal is produced, for example through the operation of an external apparatus 41 shown in Fig. 1 by a dealer.

The controller 83 performs the discharge allowing processing and controls the voltage converter 12 and the inverter 13 to supply the power of the battery 81 to the load 84. Referring to Fig. 1 and Fig. 2 in comparison, the load 84 may be the motor generator MG2. In this case, the electric storage amount in the battery 81 reduces in association with the rotating operation of the motor generator MG2. The motor generator MG2 involving high power consumption can be selected as the load 84 to quickly perform the discharge processing of the battery 81.

Referring to Fig. 1 and Fig. 2 in comparison, the load 84 may be the air conditioner 23. In this case, the electric storage amount in the battery 81 reduces in association with the temperature adjusting operation of the air conditioner 23. The air conditioner 23 involving high power consumption can be selected as the load 84 to quickly perform the discharge processing of the battery 81. Referring to Fig. 1 and Fig. 2 in comparison, the load 84 may be the auxiliary load 24. In this case, the electric storage amount in the battery 81 reduces in association with the sound output operation and the video output operation of the audio or the lighting operation of the lamp providing the auxiliary load 24. As described later, when the motor generator MG2 is selected as the load 84, the discharge processing of the battery 81 is preferably performed while the vehicle 1 is jacked up. The selection of the air conditioner 23 or the auxiliary load 24 as the load 84 can save the work of jacking up the vehicle 1.

The obtaining section 85 obtains the information about the electric storage amount from the battery 81. The information about the electric storage amount refers to the information about the voltage and the temperature of the battery 81. Referring to Fig. 1 and Fig. 2 in comparison, the obtaining section 85 corresponds to the monitor unit 31. The controller 83 suppresses the discharge processing when the degree of drop in the electric storage amount during the discharge processing falls below a predetermined value. The degree of drop in the electric storage amount includes the reduction rate of the electric storage amount, the change amount of the electric storage amount, or other parameters (for example, voltage) correlated with the drop in the electric storage amount. The predetermined value may be a fixed value previously set in design or a value calculated in performing the discharge processing of the battery. The information about the predetermined value is stored in the memory 32, and the data format of the information may be a map form.

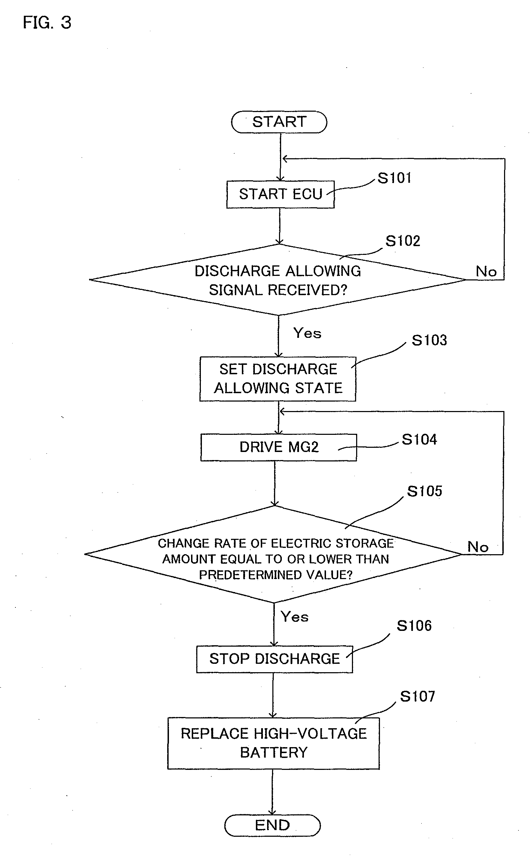

Next, description is made of a discharge processing method for the overcharged high-voltage battery 11 with reference to a flow chart of Fig. 3. In the flow chart, it is assumed that the motor generator MG2 is selected as the load 84. It is also assumed that the relay 15 is turned off since the high-voltage battery 11 is in the overcharged state.

The flow chart may be performed in a state in which the vehicle 1 having the overcharged high-voltage battery 11 mounted thereon is jacked up. At step S101, the ECU 30 starts up by receiving the power supply from the low-voltage battery 22 which is turned on through the operation of the external apparatus 41. At step S102, the ECU 30 determines whether or not the discharge allowing signal produced through the operation of the external apparatus 41 is received. When the ECU 30 receives the discharge allowing signal, the flow proceeds to step S103. When the ECU 30 does not receive the discharge allowing signal, the flow returns to step S101. The external apparatus 41 may be operated by a specialist such as the dealer or may be operated by a user according to a predetermined manual.

At step S103, the ECU 30 switches the relay 15 from OFF to ON based on the received discharge allowing signal to set the state of the high-voltage battery 11 to the discharge allowing state in which the discharge processing is allowed. At step S104, the ECU 30 controls the voltage converter 12 and the inverter 13 to drive the motor generator MG2. Since the discharge processing of the high-voltage battery 11 can be performed while the vehicle 1 is jacked up, the electric storage amount in the high-voltage battery 11 can be reduced to an easily handled level while the running of the vehicle 1 is stopped.

At step S105, the ECU 30 determines whether or not the drop rate of the electric storage amount in the high-voltage battery 11 is equal to or lower than the predetermined value. When the drop rate of the electric storage amount is equal to or lower than the predetermined value, the flow proceeds to step S106. When the drop rate of the electric storage amount is higher than the predetermined value, the flow returns to step S104 to continue the driving of the motor generator MG2. As the electric storage amount in the high-voltage battery 11 approaches the control lower limit value, the discharge is limited to reduce the drop rate of the electric storage amount. Thus, whether or not the discharge should be continued can be determined on the basis of the drop rate of the electric storage amount to prevent the electric storage amount in the high-voltage battery 11 from falling below the control lower limit value.

At step S106, the ECU 30 switches the relay 15 from ON to OFF to stop the discharge processing of the high-voltage battery 11. At step S107, the specialist such as the dealer removes the high-voltage battery 11 from the vehicle and replaces it with a new high-voltage battery 11. Since the high-voltage battery 11 having the reduced electric storage amount can be collected, the handling of the high-voltage battery 11 is facilitated. In addition, the discharge processing of the overcharged high-voltage battery 11 can be performed while it is mounted on the vehicle.

The flow chart may be performed by the ECU 30 reading a processing program for performing the processing from the memory 32. In this case, the memory 32 operates as a storage apparatus, and the ECU 30 reads the processing program stored in the storage apparatus to a memory, not shown, and interprets the program to perform the flow chart. The processing program may be stored previously in the memory 32 or may be downloaded over the Internet. The processing program may be stored on a computer-readable recording medium and may be installed for execution.

### MODIFICATION 1

Although the discharge processing is continued until the drop rate of the electric storage amount in the high-voltage battery 11 is equal to or lower than the predetermined value in the embodiment, the present invention is not limited thereto. For example, the control may be performed such that the discharge processing of the high-voltage battery 11 may be stopped when the electric storage amount falls below a predetermined value. The predetermined value refers to the electric storage amount in the high-voltage battery 11 when the voltage of at least one of the cells included in the high-voltage battery 11 drops to the discharge termination voltage. Specifically, when the voltage of at least one of the cells included in the high-voltage battery 11 drops to the discharge termination voltage (that is, when the high-voltage battery 11 reaches the overdischarged state), the ECU 30 determines that the electric storage amount in the high-voltage battery 11 falls below the predetermined value and stops the discharge processing.

In this case, the ECU 30 may stop the discharge processing by switching the relay 15 from the first state to the second state or may stop the discharge processing by outputting a prohibition signal for prohibiting the discharge processing of the high-voltage battery 11 to the inverter 13 with the relay 15 maintained in the second state. The ECU 30 may perform the discharge processing by driving the motor generator MG2 or the like for a time period based on the discharge time. The time period may be predefined time period or a time period determined by investigating the state of the overcharged high-voltage battery 11.

### MODIFICATION 2

Although the discharge allowing signal is produced through the operation of the external apparatus 41 in the embodiment, the present invention is not limited thereto. For example, the discharge allowing signal may be produced through a special operation on the vehicle components. The special operation may be an operation which the driver does not usually perform, for example pressing an accelerator of the vehicle 1 for a predetermined time period or longer over a predetermined number of times while holding the brake pedal for a predetermined time period or longer.

### MODIFICATION 3

Although the ECU 30 sets the state of the high-voltage battery 11 to the discharge allowing state at step S103 and then immediately performs the discharge processing for the high-voltage battery 11 at step S104 in the embodiment, the present invention is not limited thereto. For example, after the ECU 30 sets the state of the high-voltage battery 11 to the discharge allowing state, the dealer or the like may press the accelerator to perform the discharge processing. This can perform the discharge processing at an arbitrary time.

Thus, the "discharge allowing processing" in the present invention means that the ECU 30 controls the whole battery processing apparatus 2 to the state in which the discharge of the high-voltage battery 11 is allowed, and does not specify that the discharge processing is actually performed. For example, after the discharge allowing processing is performed, a special operation may be performed to achieve the discharge processing of the high-voltage battery 11. The special operation may be an operation which the driver does not usually perform, for example pressing the accelerator of the vehicle 1 for a predetermined time period or longer over a predetermined number of times while holding the brake pedal for a predetermined time period or longer.

### EMBODIMENT 2

In the embodiment described above, the discharge processing is performed such that the power of the high-voltage battery 11 is discharged to the load 84 connected to the high-voltage battery 11 through the relay 15 and the voltage converter 12. In Embodiment 2, discharge processing is performed by discharge to an equalizing circuit provided for a high-voltage battery 11.

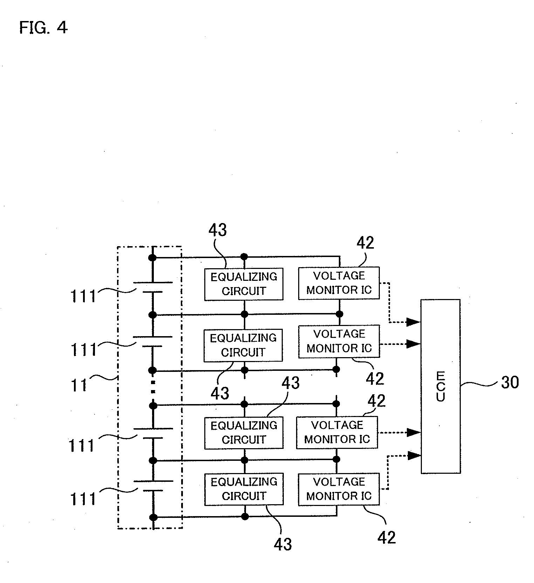

As shown in Fig. 4, the high-voltage battery 11 has a plurality of cells 111 connected electrically in series. Since the cell 111 is identical to that in the embodiment described above, the description of the cell 111 is omitted. The basic configuration except for the high-voltage battery 11 is identical to that in Embodiment 1.

Each of the cells 111 is connected electrically in parallel with a voltage monitor IC (voltage sensor) 42. The voltage monitor IC 42 detects the voltage of the cell 111 and outputs the detection result to an ECU 30. The voltage monitor 42 operates by receiving the power from the associated cell 111. The voltage monitor IC 42 is included in the monitor unit 31 in Fig. 1.

Each of the cells 111 is connected electrically in parallel with an equalizing circuit 43. The equalizing circuits 43 are used to equalize the voltages (or the electric storage amounts) among the plurality of cells 111. The operation of the equalizing circuit 43 is controlled by the ECU 30.

For example, when the ECU 30 determines that a particular one of the cells 111 has a voltage higher than those of the other cells 111 based on the outputs from the voltage monitor ICs 42, the ECU 30 operates only the equalizing circuit 43 associated with the particular cell 111 to discharge the particular cell 111. This can reduce the voltage of the particular cell 111 to a level generally equal to those of the other cells 111.

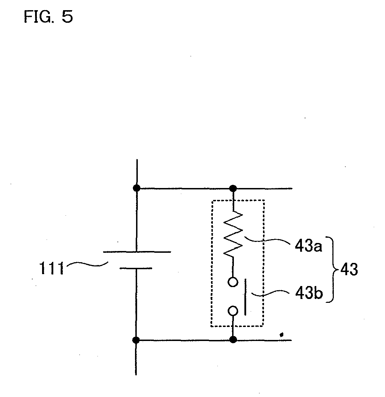

The (exemplary) specific configuration of the equalizing circuit 43 is described with reference to Fig. 5. Fig. 5 is a circuit diagram showing the configuration of the cell 111 and the equalizing circuit 43.

The equalizing circuit 43 has a resistor 43a and a switch element 43b. The switch element 43b is switched between ON and OFF in response to a control signal from the ECU 30. When the switch element 43b is switched from OFF to ON, the electric current from the cell 111 flows through the resistor 43a to allow the discharge of the cell 111. This can adjust the voltage of each of the cells 111 to equalize the voltages among the plurality of cells 111.

The equalizing circuit 43 is provided for equalizing the voltages among the plurality of cells 111 in this manner. In the present embodiment, the equalizing circuit 43 is also used for another purpose, that is, for the purpose of reducing the electric storage amount in the overcharged high-voltage battery 11 to facilitate the processing of the high-voltage battery 11.

Specifically, the ECU 30 performs discharge allowing processing of receiving a discharge allowing signal to switch the switch element 43b from OFF (second state) to ON (first state) in an overcharged state in which the charge of the high-voltage battery 11 is suppressed due to the electric storage amount in the high-voltage battery 11.

Then, discharge processing can be performed in which the power stored in the cell 111 is discharged to the resistor 43a to eliminate the overcharged state of the high-voltage battery 11. The switching operation may be performed only in the switch element 43b associated with the particular cell 111 identified as overcharged or in all the switch elements 43b.

Although the equalizing circuit 43 and the voltage monitor IC 42 are provided for each of the cells 111 in the present embodiment, the present invention is not limited thereto. A plurality of cells 111 connected electrically in series may constitute a single battery block, and a plurality of such battery blocks may be connected electrically in series to constitute an assembled battery 10. In this case, the equalizing circuit 43 and the voltage monitor IC 42 may be provided for each of the battery blocks. The voltage monitor IC 42 detects the voltage of the associated battery block, and the equalizing circuit 43 is used for the discharge processing of the associated battery block.

### MODIFICATION 4

Although the discharge processing of eliminating the overcharged state of the high-voltage battery 11 is performed by discharging the power stored in the cell 111 to the equalizing circuit 43 in Embodiment 2 described above, the present invention is not limited thereto. By way of example, the overcharged state may be eliminated by providing a switching circuit for switching between a series circuit for connecting the cells 111 in series and a parallel circuit for connecting the cells 111 in parallel and switching the connection state of the high-voltage battery 11 from the series circuit to the parallel circuit in the discharge processing of the high-voltage battery 11. In the parallel circuit, a circulating current flows from the overcharged cell 111 to the other cells 111 not overcharged, thereby performing the discharge processing to eliminate the overcharged state. This can facilitate the processing of the high-voltage battery 11. In the configuration of the present modification, the overcharged cell 111 corresponds to the battery 81, the cell 111 charged with the circulating current corresponds to the load 84, and the switching circuit corresponds to the switch element 82 (see Fig. 2).

### MODIFICATION 5

The discharge processing is performed by turning on the low-voltage battery 22 in the external apparatus 41 and then starting up the ECU 30 in the embodiment described above, the present invention is not limited thereto. For example, a diagnosis tool may be used. In this case, the external apparatus 41 is used to turn on the low-voltage battery 22, and the power is supplied from the low-voltage battery 22 to start up the ECU 30. In the overcharged state, the ECU 30 receives an overcharge signal from the monitor unit 31 and stores the signal in the memory 32. Subsequently, the external apparatus 41 is operated to perform the diagnosis tool with the ECU 30. Specifically, the ECU 30 starts a diagnosis based on an instruction from the external apparatus 41, and performs the discharge allowing processing when it is determined that the information indicating the overcharge signal is stored in the memory 32. In this case, the information indicating the overcharge signal transmitted from the memory 32 to the ECU 30 corresponds to the discharge allowing signal.

### MODIFICATION 6

In the embodiment described above, the state in which the high-voltage battery 11 reaches the charge termination voltage or exceeds the charge termination voltage is defined as the overcharged state. However, it is possible to define a state in which the control upper limit value is reached or the electric storage amount is higher than the control upper limit value as the overcharged state without setting the charge termination voltage. It is also possible to define a state in which the charge and the discharge of the high-voltage battery 11 are prohibited as the overcharged state. The setting of the overcharged state may be changed in appropriate.

In the embodiment described above, the state in which the high-voltage battery 11 reaches the discharge termination voltage or exceeds the discharge termination voltage is defined as the overdischarged state. However, it is possible to define a state in which the control lower limit value is reached or the electric storage amount is lower than the control lower limit value as the overdischarged state without setting the discharge termination voltage. It is also possible to define a state in which the charge and the discharge of the high-voltage battery 11 are prohibited as the overdischarged state. The setting of the overdischarged state may be changed in appropriate.

### DESCRIPTION OF THE REFERENCE NUMERALS

1 VEHCILE 2 BATTERY PROCESSING APPARATUS 11 HIGH-VOLTAGE BATTERY
12 VOLTAGE CONVERTER 13 INVERTER 14 ENGINE
15 RELAY MG1(MG2) MOTOR GENERATOR
D DECELERATOR P1 POWER SPLITTING PLANETARY GEAR
P2 REDUCTION PLANETARY GEAR 21 DC/DC CONVERTER
22 LOWER-VOLTAGE BATTERY 23 AIR CONDITIONER 24 AUXILIARY LOAD
30 ECU 31 MONITOR UNIT 32 MEMORY
41 EXTERNAL APPARATUS 42 VOLTAGE MONITOR IC 43 EQUALIZING CIRCUIT
81 BATTERY 82 SWITCH ELEMENT 83 CONTROLLER
84 LOAD 85 OBTAINING SECTION 111 CELL

## Claims

1. A battery processing apparatus mounted on a vehicle, comprising:
a chargeable and dischargable battery storing electric power to be supplied to a motor for driving a wheel; and
a controller performing discharge allowing processing of switching from a second state in which discharge from the battery to a load is not allowed to a first state in which the discharge from the battery to the load is allowed on the basis of a discharge allowing signal in an overcharged state of the battery in which charge of the battery is suppressed due to an electric storage amount in the battery.

2. The battery processing apparatus according to claim 1, wherein the controller performs the discharge allowing processing by controlling a switch element switching between the first state and the second state.

3. The battery processing apparatus according to claim 2, wherein the switch element is a relay, and
the controller sets the relay to the second state in the overcharged state before reception of the discharge allowing signal to prohibit running of the vehicle using the battery.

4. The battery processing apparatus according to claim 3, wherein the controller performs the discharge allowing processing and discharges the battery together.

5. The battery processing apparatus according to claim 3, wherein the controller performs the discharge allowing processing and then discharges the battery in response to operation of an accelerator pedal of the vehicle.

6. The battery processing apparatus according to claim 2, wherein the battery includes an equalizing circuit having a resistor serving as the load and the switch element, and
when the controller switches the switch element from the second state to the first state, the power of the battery is discharged to the equalizing circuit.

7. The battery processing apparatus according to any one of claims 1 to 6, further comprising an obtaining section obtaining information about the electric storage amount in the battery,
wherein, when the degree of drop of the electric storage amount is equal to or lower than a predetermined value during discharge processing based on the discharge allowing processing, the controller reduces an amount of the discharge.

8. The battery processing apparatus according to any one of claims 1 to 6, wherein, when the electric storage amount falls below a predetermined value during discharge processing based on the discharge allowing processing, the controller stops the discharge.

9. The battery processing apparatus according to any one of claims 1 to 8, wherein, when the electric storage amount in the battery exceeds a control upper limit value during the charge of the battery, the controller suppresses the charge, and when the electric storage amount in the battery reaches an electric storage amount higher than the control upper limit value and corresponding to the overcharged state, the controller prohibits the charge and the discharge.

10. A vehicle including the battery processing apparatus according to any one of claims 1 to 9.

11. A battery processing method for processing a battery mounted on a vehicle, the battery being chargeable and dischargable and storing electric power to be supplied to a motor for driving a wheel, comprising:
performing discharge allowing processing of switching from a second state in which discharge from the battery to a load is not allowed to a first state in which the discharge from the battery to the load is allowed in an overcharged state of the battery in which charge of the battery is suppressed due to an electric storage amount in the battery.

12. A battery processing program for causing a computer to perform processing operation of processing a battery mounted on a vehicle, the battery being chargeable and dischargable and storing electric power to be supplied to a motor for driving a wheel, comprising:
a discharge allowing processing step of switching from a second state in which discharge from the battery to a load is not allowed to a first state in which the discharge from the battery to the load is allowed in an overcharged state of the battery in which charge of the battery is suppressed due to an electric storage amount in the battery.
